# EUROPEAN PATENT APPLICATION

(11) **EP 3 417 743 A1**
(43) Date of publication of application: **26.12.2018**
(21) Application number: 17177357.5
(22) Date of filing: 22.06.2017
(51) Int. Cl.: A47C 19/02

(54) **CONNECTION PIECE AND BED FRAME HAVING CONNECTION PIECE**

(71) Applicant: Homy Casa Limited, Guangzhou, Guangdong (CN)
(72) Inventor: LI, YueHai, Guangzhou, Guangdong (CN)
(74) Representative: Haseltine Lake LLP

(57) **Abstract**

The invention relates to a connection piece and a bed frame having the connection piece, characterized in that, the bed frame includes a bed leg, a longitudinal beam of which two ends are respectively connected onto the bed leg, and a connection piece consisting of a lateral beam and a buckle, a plurality of penetration grooves are provided in the longitudinal beam, the buckle is fixedly provided in the penetration groove; two ends of the lateral beam are bent to form a hem, a through hole is provided in the hem, a through groove is provided in the buckle, an inner wall of the through groove is provided thereon with a block protrusion corresponding to the through hole, the lateral beam and the block protrusion are tightly fastened and fixed into the buckle via the through hole so that the longitudinal beam and the lateral beam are tightly connected together to form the bed frame. The bed frame has the characteristics of convenient transportation and storage before installation, during the installation, the lateral beam needs to be blocked into the longitudinal beam via the buckle so as to be tightly connected, without any installation tools to complete the assembly, after the installation, the bed frame is very firm and cannot be removed from the longitudinal beam, avoiding an accident, the invention has the advantages of high safety, a simple connection structure, easy installation and convenient transportation.

## Description

### TECHNICAL FIELD

The invention relates to a connection piece and a bed frame having the connection piece.

### TECHNICAL BACKGROUND

A bed, as a common kind of furniture, has been indispensable in people's lives, a bed frame is the most critical part of the bed and plays a role of supporting, stabling and bearing the weight of a human body, to ensure the stability and safety of the bed frame, the bed frame is usually made into an integral plane whole body. However, this will certainly cause the inconvenience of storage and transportation. There are two main reasons for this: first, the space occupied by the bed frame itself is very large, therefore, it will take up large space in the transportation or storage process; second, the main role of the bed frame is load - bearing, the overall bed frame is relatively bulky, thus further increasing the difficulty of transportation and handling. For the above-mentioned problems, a connection piece structure of the bed frame, consisting of a lateral beam and a bolt, is movably connected with the bed, specifically, the lateral beam is connected at both ends thereof to the longitudinal beam by means of the bolt, so as to realize the detachable connection of the lateral beam and the longitudinal beam, therefore, when the bed frame needs to be transported, the bolt can be directly removed, therefore, the lateral beam is separated from the longitudinal beam for convenient transportation and storage, however, the connection piece structure consisting of the lateral beam and the bolt has two problems: on one hand, during the disassembly and assembly processes, a screw can have a slippery wire problem due to repeated tightening or disassembly, causing the lateral beam to be loosed from the longitudinal beam and thereby easily causing an accident, on the other hand, tightening the screw requires a specialized tool, when an appropriate tool is not available, the installation or disassembly cannot be completed.

### SUMMARY OF THE INVENTION

The objective of the invention is to provide a bed frame in which the connection between a lateral beam and a longitudinal beam is tight and reliable, without any auxiliary tool for installation.

Another objective of the invention is to provide a connection piece which is convenient for connection and is tight and reliable.

In order to achieve the above objectives, the invention adopts the following technical solution: a bed frame comprises a bed leg, a longitudinal beam of which two ends are respectively connected onto the bed leg, and a connection piece consisting of a lateral beam and a buckle, the longitudinal beam is provided thereon with a plurality of penetration grooves, the buckle is fixedly provided in the penetration groove; two ends of the lateral beam are bent to form a hem, a through hole is provided in the hem, a through groove is provided in the buckle, an inner wall of the through groove is provided thereon with a block protrusion corresponding to the through hole, the lateral beam and the block protrusion are tightly fastened and fixed into the buckle via the through hole so that the longitudinal beam and the lateral beam are tightly connected together to form the bed frame.

The overall structure of the bed frame can be divided into various parts to reduce the space occupied by the bed frame before the lateral beam and the buckle are not connected, so as to facilitate the transportation and storage of the bed frame, when the bed frame needs to be assembled, the lateral beam and the longitudinal beam can directly and tightly connected via the buckle, without any other installation tool, which is simple and convenient, and further ensures the safety and firmness of the bed frame.

An upper end surface of the buckle is extended circumferentially and provided with a base platform, the buckle can conveniently be blocked and connected to a groove edge of the penetration groove on the longitudinal beam via the base platform, an importing portion of the buckle is provided in the penetration groove.

Two sides of a bottom of the buckle are upwardly extended and provided with an importing surface of which the gradient increases gradually. The arrangement of the importing surface facilitates the buckle to be blocked into the penetration groove on the longitudinal beam from the top to the bottom, which has the advantages of a simple structure and easy assembly.

A block groove is provided on the importing portion and between a top of the importing surface and a bottom surface of the base platform, the buckle is limited by the groove edge via the block groove. The buckle is limited by the groove edge of the penetration groove up and down so that the buckle is tightly fastened and fixed in the longitudinal beam, ensuring the firmness and stability of the bed frame.

An upper surface of the block protrusion is provided with an inclined surface of which the gradient increases gradually. The inclined surface is arranged so that the lateral beam has a buffer area after the lateral beam is blocked into the through groove and in contact with the block protrusion, so as to facilitate the lateral beam to be smoothly blocked into the through groove and to make the block protrusion fastened tightly in the through hole.

The longitudinal beam, the lateral beam and the bed leg are hollow structures. From the point of view of mechanics, outer layers of the longitudinal beam, the lateral beam and the bed leg are subjected to greater stress while the stress of a central part thereof is smaller, therefore, the longitudinal beam, the lateral beam and the bed leg which have the hollow structures do not have a big impact on its strength and stiffness, but can significantly reduce its weight and material costs.

An end of the lateral beam is flat-bending shaped. The flat-shaped end facilitates the connection of the lateral beam and the longitudinal beam and prevents the lateral beam from bending or deforming due to the hollow structure of the lateral beam.

A connection piece comprises a connection rod and a buckle, an end of the connection rod is bent to form a hem, a through hole is provided in the hem; a through groove is provided in the buckle, an inner wall of the through groove is provided thereon with a block protrusion corresponding to the through hole, the connection rod and the block protrusion are tightly fastened and fixed into the buckle via the through hole. This connection way is firm and reliable and has the characteristics of high safety and no requirement of any other installation tool.

An upper end surface of the buckle is extended circumferentially and provided with a base platform. The upper end surface of the buckle is provided with the base platform so that the buckle can be conveniently placed or blocked and connected onto a carrier.

An upper end surface of the block protrusion is provided with an inclined surface of which the gradient increases gradually. The arrangement of the inclined surface facilitates the connection rod to be conveniently blocked into the through groove.

Compared with the prior art, the invention has the following advantages: the bed frame of the invention has the characteristics of convenient transportation and storage before installation, during the installation, the lateral beam needs to be blocked into the longitudinal beam via the buckle so as to be tightly connected, without any installation tools to complete the assembly, after the installation, the bed frame is very firm and cannot generally be removed from the longitudinal beam, avoiding an accident. The invention has the advantages of high safety, a simple connection structure, easy installation and convenient transportation.

### BRIEF DESCRIPTION OF THE DRAWINGS

Figure 1 is a whole structural diagram of a bed frame of an embodiment of the invention;
Figure 2 is a structural diagram of the assembly of a connection piece of an embodiment of the invention;
Figure 3 is a cross-section diagram of the assembly of a connection piece of an embodiment of the invention;
Figure 4 is a structural diagram of a buckle of an embodiment of the invention;
Figure 5 is a cross-section structural diagram of a buckle of an embodiment of the invention;
Figure 6 is a diagram of the assembly of a buckle and a longitudinal beam of an embodiment of the invention;
Figure 7 is a diagram of the assembly of a lateral beam, a buckle and a longitudinal beam of an embodiment of the invention;
Figure 8 is a cross-section diagram of the assembly of a lateral beam and a longitudinal beam of an embodiment of the invention; and
Figure 9 is a cross-section diagram of the assembly of a lateral beam and a buckle of an embodiment of the invention.

Description of reference numbers: 1: Bed Leg, 2: Longitudinal Beam, 21: Penetration Groove, 211: Groove Edge, 3: Lateral Beam, 31: Hem, 312: Through Hole, 4: Buckle, 41: Through Groove, 411: Block Protrusion, 412: Inclined Surface, 42: Base Platform, 43: Importing Portion, 44: Importing Surface, 45: Block Groove, 5: Connection Piece, 10: Connection Rod.

### EMBODIMENTS OF THE INVENTION

The content of the invention is further described with the combination of figures and embodiments.

### Embodiment:

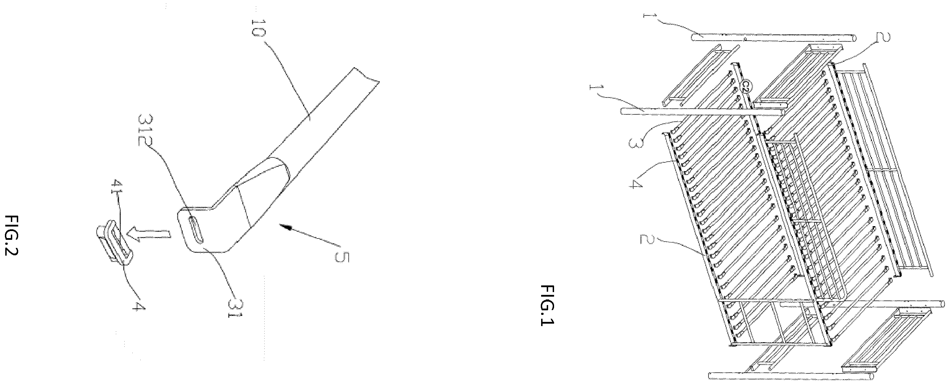

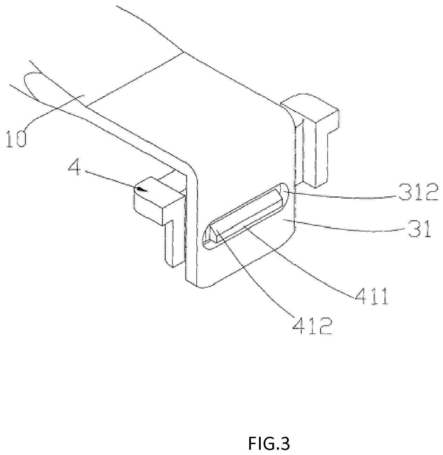

See Figures 2 and 3, a connection piece consists of a connection rod 10 and a buckle 4, an end of the connection rod 10 is bent to form a hem 31, a through hole 312 is provided in the hem 31, a through groove 41 is provided in the buckle 4, an inner wall of the through groove 41 is provided thereon with a block protrusion 411 corresponding to the through hole 312, the connection rod 10 and the block protrusion 411 are tightly fastened and fixed into the buckle 4 via the through hole 312.

An upper end surface of the buckle 4 is extended circumferentially and provided with a base platform 42. When the connection piece is used on an object such as a bed frame, a computer desk, a bookcase or the like, the arrangement of the base platform facilitates the buckle to be provided on parts and components of the respective object. In order to ensure the buckle 4 to be smoothly blocked into a block groove from the top to the bottom, an upper end surface of the block protrusion 411 is an inclined surface 412 of which the gradient increases gradually.

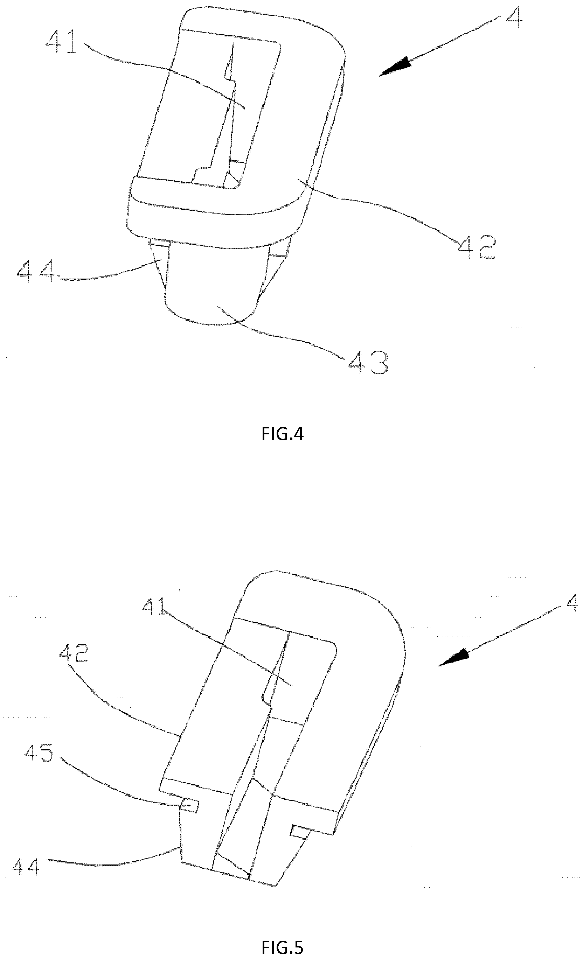

Refer to Figure. 1, Figure. 2, Figure. 4, Figure. 5 and Figure. 9, the present embodiment also provides a bed frame having the above-described connection piece, a bed frame comprises four bed legs 1 and four longitudinal beams 2 of which two ends are respectively connected onto the bed leg 1, the connection piece 5 consists of a lateral beam 3 and a buckle 4, the lateral beam 3 is a connection rod 10 of the above-mentioned connection piece; the longitudinal beam 2 is provided thereon with a plurality of penetration grooves 21, the buckle 4 is fixedly provided in the penetration groove 21; two ends of the lateral beam 3 are bent to form a hem 31, the through hole 312 is provided in the hem 31, the through groove 41 is provided in the buckle 4, an inner wall of the through groove 41 is provided thereon with a block protrusion 411 corresponding to the through hole 312, the lateral beam 3 and the block protrusion 411 are tightly fastened and fixed into the buckle 4 via the through hole 312.

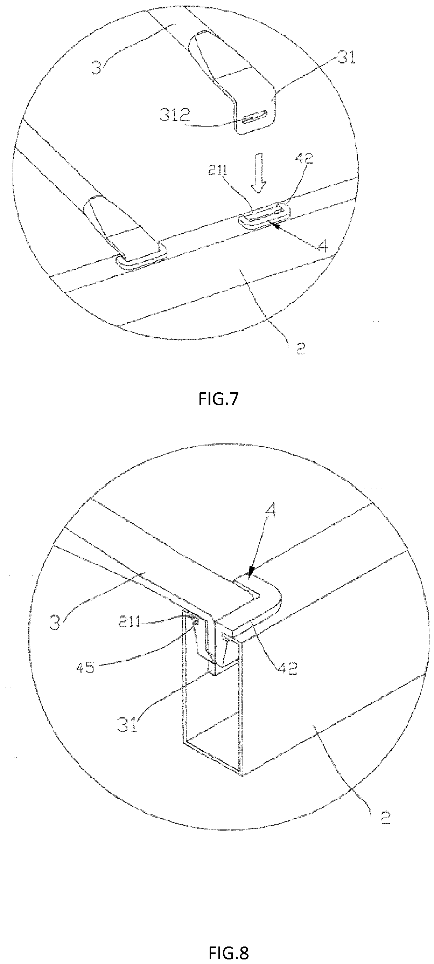

See Figure. 7, Figure 7 is a diagram of the assembly of the lateral beam 3, the buckle and the longitudinal beam 2, the upper end surface of the buckle 4 is extended circumferentially and provided with the base platform 42, the buckle 4 may be conveniently provided on a groove edge 211 of the penetration groove 21 via the base platform 42, at this time, an importing portion 43 of the buckle 4 is provided in the penetration groove 21, during the assembly, the lateral beam 3 is blocked in the through groove 41 from the top to the bottom.

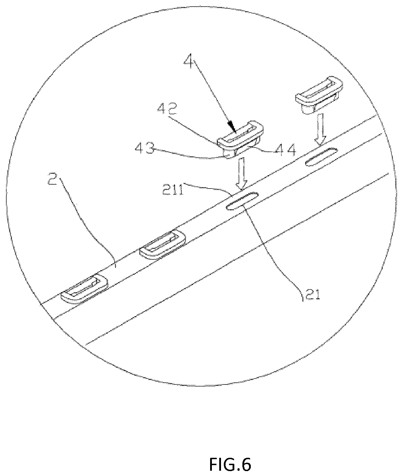

See Figure 8, the block groove 45 is provided on the importing portion 43 and between a top of the importing surface 44 and a bottom surface of the base platform 42, the buckle 4 is limited by the groove edge 211 via the block groove 45, this ensures the buckle 4 is tightly fixed in the penetration groove 21 of the longitudinal beam 2, the buckle 4 may not be removed from the longitudinal beam unless the structure of the buckle 4 is broken. See Figure 6, to facilitate the buckle 4 to be blocked into the penetration groove 21 from the top to the bottom, the importing surface 44 which is extended upwards and of which the gradient increases gradually is provided at two sides of a bottom of the buckle 4.

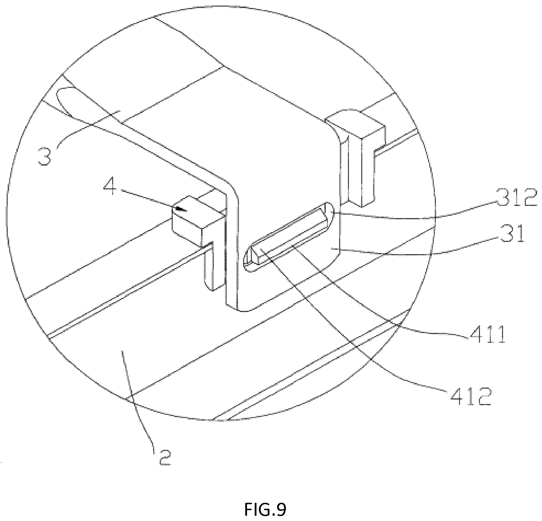

See Figure 9, the upper end surface of the block protrusion 411 is provided with the inclined surface 412 of which the gradient increases gradually, therefore, when the lateral beam 3 is inserted into the buckle 4 from the top to the bottom, the arrangement of the inclined surface 412 facilitates the block protrusion 41 to be blocked into the through hole 312, this ensures that the lateral beam 3 is tightly fixed by the buckle 4, the buckle 4 may not be removed from the lateral beam 3 unless the structure of the buckle 4 is broken.

In the present embodiment, the longitudinal beam 2, the lateral beam 3 and the bed leg 1 are hollow structures, an end of the lateral beam 3 is flat-bending shaped.

When the bed frame of the present embodiment is not installed, the components of the bed frame may be separately transported and stored, thus ensuring that the space occupied by the bed frame is small; during the installation, the lateral beam may be blocked into the longitudinal beam via the buckle without any other auxiliary tool, being convenient and reliable.

The above detailed description is directed to specific embodiments of the invention, this embodiment is not intended to limit the patent scope of the invention, any equivalent implementation or alteration not departing from the scope of the invention shall be included in the patent scope of the present case.

## Claims

1. A connection piece, comprising a connection rod (10) and a buckle (4), **characterized in that**, an end of the connection rod (10) is bent to form a hem (31), a through hole (312) is provided in the hem (31), a through groove (41) is provided in the buckle (4), an inner wall of the through groove (41) is provided thereon with a block protrusion (411) corresponding to the through hole (312), the connection rod (10) and the block protrusion (411) are tightly fastened and fixed into the buckle (4) via the through hole (312).

2. The connection piece according to claim 1, **characterized in that**, an upper end surface of the buckle (4) is extended circumferentially and provided with a base platform (42).

3. The connection piece according to claim 2, **characterized in that**, an upper end surface of the block protrusion (411) is provided with an inclined plane (412) of which the gradient increases gradually.

4. A bed frame, comprising a bed leg (1) and a longitudinal beam (2) of which two ends are respectively connected onto the bed leg (1), **characterized in that**, the bed frame still comprises a connection piece (5) consisting of a lateral beam (3) and a buckle (4), the longitudinal beam (2) is provided thereon with a plurality of penetration grooves (21), the buckle (4) is fixedly provided in the penetration groove (21); two ends of the lateral beam (3) are bent to form a hem (31), a through hole (312) is provided in the hem (31), a through groove (41) is provided in the buckle (4), an inner wall of the through groove (41) is provided thereon with a block protrusion (411) corresponding to the through hole (312), the lateral beam (3) and the block protrusion (411) are tightly fastened and fixed into the buckle (4) via the through hole (312).

5. The bed frame according to claim 4, **characterized in that**, an upper end surface of the buckle (4) is extended circumferentially and provided with a base platform (42), the buckle (4) is provided on a groove edge (211) of the penetration groove (21) via the base platform (42), an importing portion (43) of the buckle (4) is provided in the penetration groove (21).

6. The bed frame according to claim 5, **characterized in that**, an importing surface (44) which is extended upwards and of which the gradient increases gradually is provided at two sides of a bottom of the buckle (4).

7. The bed frame according to claim 6, **characterized in that**, a block groove (45) is provided on the importing portion (43) and between a top of the importing surface (44) and a bottom surface of the base platform (42), the buckle (4) is limited by the groove edge (211) via the block groove (45).

8. The bed frame according to claim 7, **characterized in that**, an upper end surface of the block protrusion (411) is provided with an inclined plane (412) of which the gradient increases gradually.

9. The bed frame according to claim 8, **characterized in that**, the longitudinal beam (2), the lateral beam (3) and the bed leg (1) are hollow structures.

10. The bed frame according to claim 9, **characterized in that**, an end of the lateral beam (3) is flat-bending shaped.
